# EUROPÄISCHE PATENTSCHRIFT

(11) **EP 4 784 912 B1**
(45) Veröffentlichungstag und Bekanntmachung des Hinweises auf die Patenterteilung: **23.09.2026**
(21) Anmeldenummer: 24794356.6
(22) Anmeldetag: 18.10.2024
(51) Int. Cl.: F16B 37/00

(54) **MONTAGESYSTEM FÜR EINE ACHSVORRICHTUNG EINES FAHRZEUGS**
MOUNTING SYSTEM FOR AN AXLE DEVICE OF A VEHICLE
SYSTÈME DE MONTAGE POUR UN DISPOSITIF D'ESSIEU D'UN VÉHICULE

(30) Priorität: 18.10.2023 DE 102023128621
(43) Veröffentlichungstag der Anmeldung: 05.08.2026
(73) Patentinhaber: SAF-HOLLAND GmbH, 63856 Bessenbach (DE)
(72) Erfinder: STEGMANN, Rainer, 63768 Hösbach (DE); KATZKE, André, 63879 Weibersbrunn (DE)
(74) Vertreter: Müller Schupfner & Partner Patent- und Rechtsanwaltspartnerschaft mbB (Muc)
(86) Internationale Anmeldenummer: PCT/EP2024/079483
(87) Internationale Veröffentlichungsnummer: WO 2025/083200

(56) Entgegenhaltungen:
- DE-U1- 202009 004 589

## Beschreibung

Die vorliegende Erfindung betrifft ein Montagesystem, insbesondere für eine Achsvorrichtung eines Fahrzeugs.

Zur Einstellung der Fahrspur eines Fahrzeugs, wie eines PKW, LKW oder eines Anhängers, werden Fahrwerkskomponenten für gewöhnlich mit gesonderten Bolzen befestigt, welche beim Anziehen der Fahrwerkskomponente relativ zum restlichen Fahrwerk oder Chassis des Fahrzeugs verlagert werden können. Dabei weisen die einstellbaren Bolzen einen Kopf auf, an welchem eine exzentrische Scheibe angeordnet ist. Je nach Winkelposition dieser Scheibe kann diese eine kontinuierliche und besonders feine Verlagerung der Fahrwerkskomponente um wenige Winkelschritte oder Längeneinheiten realisieren. Dadurch kann beispielsweise die Vor- bzw. Nachspur eines Rades oder auch die Ausrichtung einer Starrachse derart justiert werden, dass eine optimale und vorgesehene Fahrdynamik bereitgestellt werden kann. Dadurch, dass diese Methode besonders einfach und kostengünstig anzuwenden ist, wird sie unter anderem vermehrt für Anhänger eingesetzt. Des Weiteren bestehen auch Justiervorrichtungen, wobei der Bolzen und eine exzentrische Scheibe getrennt auftreten, aber miteinander im Verbund wirken.

Diese geteilte Ausführung findet häufig Anwendung bei Nutzfahrzeugen und Anhänger, wobei gesteigerte Lastfälle toleriert werden. Die Montage oder auch Justage erfolgen dabei für gewöhnlich in zwei Schritten. Zum einen wird die Spannscheibe, wie durch die Fahrwerkskinematik vorgegeben, mit einem ersten Werkzeug in eine entsprechende Einstellposition gebracht. Zum anderen wird in einem zweiten Schritt eine Mutter auf einen Bolzen gegen die Exzenterscheibe mit einem zweiten Werkzeug gekontert, um das Fahrwerk oder die jeweilige Fahrwerkskomponente in der zuvor eingestellten Position zu fixieren. Dieser Montageprozess erweist sich jedoch als komplex und aufwändig, da eine Relativposition der Spannscheibe während des Anziehens der Mutter verändert werden kann und zusätzlich ein Wechsel der nötigen Werkzeuge vollzogen werden muss. Das kann wiederum zu einer ineffizienten Handhabung während der Montage führen.

Die DE 20 2009 004 589 U1 betrifft ein Exzentereinstellelement mit einem Stift mit mindestens einem freien Ende mit einem profilierten Abschnitt und einem endseitig daran anschließenden Außengewinde mit einem geringeren Außendurchmesser, wobei auf den profilierten Abschnitt eine Exzenterscheibe aufgesteckt ist, die durch eine auf das Außengewinde aufgeschraubte Mutter gesichert ist, dadurch gekennzeichnet, dass zwischen Exzenterscheibe und Mutter ein hohlzylindrisches oder rohrförmiges Distanzstück angebracht ist.

Der Erfindung liegt die Aufgabe zugrunde, eine einfache und besonders effiziente Vorrichtung bereitzustellen.

Die Aufgabe wird gelöst mit einem Montagesystem gemäß Anspruch 1 sowie mit einem Betätigungswerkzeug gemäß Anspruch 13, einem Fahrzeug gemäß Anspruch 15 und einer Verwendung gemäß Anspruch 16. Weitere Vorteile, Ausgestaltungen oder Merkmale ergeben sich aus der Beschreibung, den Figuren und/oder aus den Unteransprüchen.

Gemäß einem Aspekt der vorliegenden Erfindung wird ein Montagesystem bereitgestellt, umfassend eine Mutter und ein Betätigungselement, wobei die Mutter eine Drehmomentübertragungsstruktur und das Bestätigungselement eine Drehmomentübertragungsgegenstruktur aufweisen, wobei die Mutter insbesondere einen Betätigungsbereich, bevorzugt außenumfänglich, aufweist, wobei die Mutter eine sich in eine Längsrichtung erstreckende Ausnehmung aufweist, wobei die Mutter in einer Primärstellung relativ zu dem Betätigungselement, insbesondere um die Längsrichtung, freidrehbar ist, wobei in einer Sekundärstellung zwischen Mutter und Betätigungselement formschlüssig eine Drehmomentübertragung, insbesondere um die Längsrichtung, zwischen der Drehmomentübertragungsstruktur und der Drehmomentübertragungsgegenstruktur möglich ist.

Die beanspruchte Vorrichtung bietet unter anderem den Vorteil, dass die Ausrichtung des Betätigungselements und das Anziehen der Mutter durch den Formschluss in einem Betriebsmodus synchronisiert werden kann, sodass eine gezielte Einstellung möglich ist und in einem anderen Modus die Mutter insbesondere angezogen werden kann.

**In** einer bevorzugten Ausführungsform kann ein Montagesystem aus einer Mutter und einem Betätigungselement bestehen, wobei das Montagesystem auch weitere und/oder zusätzliche Bauteile umfassen kann. Die Mutter ist vorzugsweise aus einem metallischen Werkstoff gefertigt, insbesondere kann die Mutter einen, bevorzugt gehärteten, insbesondere vergüteten, Stahl umfassen, um möglichst widerstandsfähig gegen Belastungen zu sein. Die Mutter kann insbesondere einstückig sein. In anderen Worten kann die Mutter durch ein Bauteil gebildet sein. Hierdurch kann eine besonders einfache Montage erfolgen. Des Weiteren kann sich eine Längsrichtung entlang eines Gewindes, insbesondere eines Innengewindes, der Mutter erstrecken, vorteilhafterweise derart, dass die Längsrichtung insbesondere durch den Mittelpunkt der Mutter führt und/oder dass die zentrale Achse des Gewindes auf der Längsrichtung liegt. Die Ausnehmung der Mutter erstreckt sich in Längsrichtung, wobei die Ausnehmung die Mutter in Längsrichtung insbesondere vollständig durchdringt. In der Ausnehmung ist vorteilhafterweise das Innengewinde ausgebildet. Die Ausnehmung dient dazu, einen Bolzen aufzunehmen. Die Mutter kann ein bzw. das Innengewinde aufweisen, sodass die Mutter mit einem bzw. dem Bolzen verschraubt werden kann. Dabei sind metrische Gewinde vorteilhaft, beispielsweise von M6 bis M22. Dadurch können verschiedene Belastungsanforderungen durch unterschiedliche Dimensionierungen oder Materialstärken abgedeckt werden. Des Weiteren kann das Innengewinde der Mutter auch andere Gewindearten, wie Trapezgewinde, Sägegewinde, Rundgewinde oder Flachgewinde aufweisen, wobei das Innengewinde nicht auf die genannten Gewindearten beschränkt ist. Die Mutter weist einen Betätigungsbereich auf, welcher insbesondere einen Teil der Außenkontur der Mutter ausbilden kann. In anderen Worten kann der Betätigungsbereich die Mutter in einer radialen Richtung begrenzen. Die radiale Richtung steht insbesondere senkrecht auf der Längsrichtung. Der Betätigungsbereich dient dazu, dass ein Werkzeug formschlüssig in Eingriff mit der Mutter bringbar ist, um so formschlüssig ein Drehmoment auf die Mutter, insbesondere um die Längsrichtung, applizieren zu können. Der Betätigungsbereich besitzt vorteilhafterweise Betätigungsflächen, die eine Normale in die radiale Richtung aufweisen können. Der Betätigungsbereich kann eine 6-Kant-Geometrie aufweisen, sodass dieser bzw. die Mutter in Eingriff mit einem entsprechenden Werkzeug bringbar ist. Die Mutter kann auch eine davon abweichende Außengeometrie aufweisen, vorzugsweise eine Torx-Geometrie, und/oder besonders bevorzugt einen Vielkant. Dadurch ist ein besonders breiter Einsatzzweck und eine Wechselwirkung mit unterschiedlichen Drehwerkzeugen möglich. Des Weiteren kann die Mutter eine Drehmomentübertragungsstruktur aufweisen, welche dazu ausgestaltet sein kann, Momente und ggf. auch Kräfte von und zur Mutter, insbesondere durch formschlüssigen Eingriff mit der Drehmomentübertragungsgegenstruktur, zu übertragen. Die Drehmomentübertragungsstruktur kann einstückig mit einem Grundkörper der Mutter ausgebildet sein oder die Drehmomentübertragungsstruktur kann durch einen oder mehrere Bestandteile der Mutter ausgebildet sein. Die Drehmomentübertragungsstruktur weist insbesondere in Längsrichtung oder steht in Längsrichtung vor. Hierdurch kann eine besonders kompakte Mutter in radialer Richtung erreicht werden, wodurch Bauraum gespart werden kann, da der Bauraum in radialer Richtung meist sehr begrenzt ist. Die Drehmomentübertragungsstruktur kann umfänglich um die Mutter orientiert, alternativ auf einem Kreis orientiert sein, welcher insbesondere konzentrisch zur Längsrichtung ausgerichtet ist. Alternativ oder in anderen Worten kann die Drehmomentübertragungsstruktur einen in sich geschlossenen Ring ausbilden, welcher sich insbesondere um die Längsrichtung erstreckt bzw. die Längsrichtung umgibt. Des Weiteren kann die Drehmomentübertragungsstruktur eine Verzahnung aufweisen oder sein. Alternativ oder zusätzlich bevorzugt kann die Drehmomentübertragungsstruktur als männliche oder als eine weibliche Übertragungsstruktur ausgebildet sein. Eine männliche Übertragungsstruktur kann z.B. ein Stift sein. Die Drehmomentübertragungsstruktur kann dabei ein Element sein, eine Struktur oder durch eine Vielzahl von Elementen oder Strukturen. Unter einem Element in diesem Sinne ist insbesondere ein Bauteil oder eine Baugruppe zu verstehen. Eine Struktur ist insbesondere eine Oberfläche eines Körpers, die in diesem Fall zur formschlüssigen Drehmomentübertragung dient oder eine derartige Möglichkeit bereitstellen kann. Darüber hinaus kann die Oberfläche der Drehmomentübertragungsstruktur eine gesteigerte Rauheit aufweisen, die jener Rauheit einer gegossenen Materialoberfläche übersteigt. Dadurch kann eine Kraftübertragung zur Drehmomentübertragungsgegenstruktur gesteigert, insbesondere der Kraftschluss zwischen den beiden Aktionspartnern (Drehmomentübertragungsstruktur und Drehmomentübertragungsgegenstruktur) gesteigert werden. Die Drehmomentübertragungsgegenstruktur ist insbesondere komplementär zu der Drehmomentübertragungsstruktur ausgebildet. In anderen Worten können die Drehmomentübertragungsstruktur und Drehmomentübertragungsgegenstruktur in einen formschlüssigen Eingriff bringbar sein. Die Drehmomentübertragungsgegenstruktur kann eine Oberflächenstruktur aufweisen, die mit jener Oberflächenstruktur der Drehmomentübertragungsstruktur in Eingriff bringbar ist, insbesondere die gleiche Oberflächenstruktur wie die Drehmomentübertragungsstruktur aufweisen. Das Betätigungselement des Montagesystems kann aus einem metallischen Werkstoff gefertigt sein, insbesondere kann das Betätigungselement das gleiche Material wie die Mutter aufweisen. Das kann dazu führen, dass eine Korrosionsbeständigkeit zwischen der Mutter und dem Betätigungselement gesteigert wird. Das Betätigungselement kann derart ausgestaltet sein, dass es in direktem Kontakt mit der Mutter, relativ zur Mutter anordenbar sein kann und/oder angeordnet ist. In einer Sekundärstellung kann das Betätigungselement entlang der Längsrichtung mit der Mutter insbesondere formschlüssig eingreifen, sodass ein Drehmoment um die Längsrichtung zwischen Mutter und Betätigungselement übertragen werden kann. In der Sekundärstellung können daher das Betätigungselement und die Mutter gemeinsam um die Längsrichtung gedreht werden, sodass vorteilhafterweise kein Schlupf bzw. keine Relativbewegung bzw. nur eine durch den Formschluss begrenzte spielbehaftete Relativbewegung zwischen diesen Elementen um die Längsrichtung auftritt. Dabei kann die Drehmomentübertragungsstruktur mit der Drehmomentübertragungsgegenstruktur in anderen Worten in Eingriff stehen. Bei einem Übergang von der Sekundärstellung in eine Primärstellung werden das Betätigungselement und/oder die Mutter, insbesondere deren Schwerpunkte, entlang der Längsrichtung voneinander beabstandet bzw. so beabstandet, dass kein Kontakt, insbesondere kein Formschluss, zwischen Betätigungselement und Mutter in der Primärstellung besteht bzw. möglich ist. In der Primärstellung kann die Drehmomentübertragungsstruktur von der Drehmomentübertragungsgegenstruktur getrennt bzw. in Längsrichtung beabstandet sein. In der Primärstellung können das Betätigungselement und die Mutter unabhängig voneinander, insbesondere um die Längsrichtung, drehbar sein. Um von der Primärstellung in die Sekundärstellung oder umgekehrt überführt zu werden, kann die Mutter, insbesondere über den Betätigungsbereich oder eine Anschlagfläche, manipuliert bzw. verändert werden. Mit anderen Worten kann die Mutter, insbesondere in den Primärzustand oder den Sekundärzustand, schaltbar sein. Das kann den Vorteil liefern, dass eine Justage des Betätigungselements und die Festlegung der Mutter in einem Arbeitsschritt erfolgen können. Die Mutter kann daher gerade nicht als Schraubensicherung verstanden werden. Jedoch ist denkbar, dass die Mutter schraubensichernde Elemente aufweist und/oder mit schraubensichernden Elementen zusammenwirkt. Der Betätigungsbereich und/oder die Anschlagfläche können dazu ausgestaltet sein, eine äußere Krafteinwirkung, insbesondere eine Normalkraft entlang der Längsrichtung, aufzunehmen und auf die Mutter weiterzuleiten. Das kann den Effekt liefern, dass sie die Mutter, insbesondere ein Teil der Mutter, derart verlagert, dass ein Übergang von der Primärstellung in die Sekundärstellung oder umgekehrt erfolgt. Dadurch können unterschiedliche Betriebsmodi realisiert werden.

Vorzugsweise kann die Mutter mehrteilig ausgestaltet sein. Darunter kann eine Mutter als Baugruppe, umfassend mehrere Bauteile, verstanden werden. Insbesondere ist beispielsweise die Drehmomentübertragungsstruktur ein Bauteil, welches verschieblich zu oder an einem Mutterkorpus anordenbar oder angeordnet sein kann. Alternativ oder zusätzlich bevorzugt kann die Mutter neben dem Mutterkorpus auch zumindest ein weiteres Bauteil aufweisen, welches wiederum zumindest teilweise die Drehmomentübertragungsstruktur ausbildet oder aufweist. Inbesondere ist es möglich, dass verschiedene Bauteile der Mutter jeweils einen Teil der Drehmomentübertragungsstruktur ausbilden oder aufweisen. Alternativ oder zusätzlich bevorzugt weist der Mutterkorpus einen Teil der Drehmomentübertragungsstruktur auf oder bildet diese zumindest teilweise oder vollständig aus. Der Begriff Mutterkorpus kann auch gleichbedeutend mit einem Bauteil "Mutter" verstanden werden. Vorteilhafterweise bildet der Mutterkorpus ein oder das Innengewinde und/oder die Ausnehmung zumindest teilweise aus oder umfasst diese. Durch die Aufteilung der Mutter in mehrere Bauteile kann eine fertigungsgerechte und/oder fertigbare Ausgestaltung der Bauteile realisiert werden. Darüber hinaus kann der Mutterkorpus dazu ausgestaltet sein, mit unterschiedlich ausgestalteten Bauteilen in Kontakt zu treten. Mit anderen Worten kann die Variantenvielfalt der Baugruppe gesteigert werden, indem einzelne Bauteile der Baugruppe getauscht werden. Insbesondere können unterschiedliche Drehmomentübertragungsstrukturen, die sich je zumindest in ihrer Verzahnung unterscheiden, an einen Mutterkorpus angeordnet werden. Dadurch kann die Drehmomentübertragung zwischen der Mutter und dem Betätigungselement variiert und an geforderte Lastfälle angepasst werden.

Vorzugsweise kann die Mutter einen Vorsprung entlang der Längsrichtung aufweisen. Ein Vorsprung kann auch als sich in Längsrichtung erstreckende Materialanhäufung, insbesondere Fortsatz oder Erhebung, definiert werden, welcher sich umfänglich von der Mutter erstreckt. Der Vorsprung kann an dem Ende der Mutter angeordnet sein, welches mit dem Betätigungselement wechselwirkt und/oder an dem Ende, worüber hinaus die Drehmomentübertragungsstruktur im Sekundärzustand verlagerbar ist. Der Vorsprung kann dazu ausgestaltet sein, mit dem Betätigungselement in Kontakt zu treten, insbesondere mit dem Betätigungselement in Kontakt bringbar zu sein, vorzugsweise als Anschlag hin zu dem Betätigungselement ausgestaltet sein. Dadurch kann ein Bewegungsfreiheitsgrad in Längsrichtung beschränkt werden. Ferner kann der Vorsprung einen geringeren Außendurchmesser als die Drehmomentübertragungsstruktur aufweisen. Mit anderen Worten kann der Vorsprung von der Drehmomentübertragungsstruktur außenumfänglich umgeben sein. Darüber hinaus kann der Vorsprung in eine komplementäre Tasche oder Ausnehmung des Betätigungselements eingesetzt werden, insbesondere eingreifen. Das kann den Effekt einer axialen Führung entlang der Längsrichtung zwischen Mutter und Betätigungselement herbeiführen.

Vorzugsweise kann die Drehmomentübertragungsstruktur durch zumindest eine Feder, insbesondere in Längsrichtung und/oder in die Primärstellung, vorgespannt sein. Die Feder kann eine Kraft entlang der Längsrichtung ausüben, die zwischen den beiden Aktionspartnern (Drehmomentübertragungsstruktur und Mutter) wirkt. Dadurch kann durch die Federkraft eine Verlagerung der Drehmomentübertragungsstruktur in die Primärstellung relativ zur Mutter erzielt werden, insbesondere wenn keine weiteren Kräfte entlang der Längsrichtung auf die Mutter und/oder die Drehmomentübertragungsstruktur wirken. Vorzugsweise kann die Feder als Spiralfeder ausgebildet sein. Die Feder kann sowohl mit der Mutter als auch mit der Drehmomentübertragungsstruktur mittelbar über ein Bauteil oder unmittelbar, insbesondere direkt, in Kontakt bringbar sein oder in Kontakt stehen. Des Weiteren können auch mehrere Federn, insbesondere mit gleichen Federraten, zwischen den Aktionspartnern wechselwirken, insbesondere wobei sich die Federrate der mehreren Federn unterscheiden. Unterschiedliche Federraten können zu einem progressiven Kraftaufwand beim Überführen des Montagesystems vom Primärzustand in den Sekundärzustand führen. Eine Mehrzahl von Federn kann an unterschiedlichen Kraftangriffspunkten der Aktionspartner angeordnet sein. Mit anderen Worten können mehrere Federn auf einer Ebene angeordnet sein, derer Normale insbesondere entlang der Längsrichtung vorläuft. Dadurch kann eine besonders gleichmäßige Krafteinwirkung auf die Aktionspartner realisiert werden.

Vorzugsweise kann die Drehmomentübertragungsstruktur in die Sekundärstellung oder in die Primärstellung entlang der Längsrichtung verlagerbar sein. Mit anderen Worten kann eine Relativbewegung der Drehmomentübertragungsstruktur zum Schwerpunkt der Mutter erfolgen, wobei diese Relativbewegung entlang der Längsrichtung ausführbar ist. Insbesondere sind die Drehmomentübertragungsstruktur ausschließlich entlang der Längsrichtung verlagerbar. Ausschließlich kann eine spielbehaftete Bewegung in andere Richtungen, beispielsweise eine Drehung um die Längsrichtung herum, einschließen. Sowohl die Primärstellung, als auch die Sekundärstellung, können bei der Relativbewegung je eine Endposition definieren. Anders gesagt, kann keine Relativbewegung zwischen Drehmomentübertragungsstruktur und Schwerpunkt der Mutter über die Primärstellung oder Sekundärstellung hinaus realisiert werden. Das kann den Effekt liefern, dass Drehmomentübertragungsstruktur und die anderen Bestandteilte Mutter oder der Mutterkorpus nicht selbständig voneinander trennbar sein können.

Vorzugsweise kann die Drehmomentübertragungsstruktur und die Drehmomentübertragungsgegenstruktur als je eine komplementäre Struktur zueinander, insbesondere als Verzahnung, ausgebildet sein. Dadurch kann ein Formschluss, insbesondere ein mit wenig Spiel behafteter Formschluss, zwischen dem Kraftübertragungspaar (Drehmomentübertragungsstruktur und Drehmomentübertragungsgegenstruktur) realisiert werden. Des Weiteren kann eine Drehmomentübertragung von der Mutter zum Betätigungselement oder umgekehrt durch das Kraftübertragungspaar erfolgen. Dadurch kann eine kongruente oder zumindest synchronisierte Drehung des Kraftübertragungspaares im Sekundärzustand der Mutter erfolgen.

Vorzugsweise kann die Drehmomentübertragungsstruktur als männliche Struktur ausgebildet sein und wobei die Drehmomentübertragungsgegenstruktur als, insbesondere komplementäre, weibliche Struktur ausgebildet ist und/oder die Drehmomentübertragungsgegenstruktur als männliche Struktur ausgebildet ist und wobei die Drehmomentübertragungsstruktur als, insbesondere komplementäre, weibliche Struktur ausgebildet sein kann. Eine männliche Struktur kann dadurch definiert werden, dass sie in eine weibliche Struktur eindringt, wobei zwischen den beiden Strukturen ein formschlüssiger Eingriff erfolgt. Die weibliche Struktur kann dazu ausgestaltet sein, die männliche Struktur aufzunehmen. Bei dem reversiblen Formschluss zwischen einer männlichen und einer weiblichen Struktur kann es sich um eine Spiel- oder Übergangspassung handeln. Dadurch kann eine einfache Lösbarkeit des Formschlusses, insbesondere durch die Federkraft, erzielt werden. Es ist denkbar, dass sowohl die Drehmomentübertragungsstruktur, als auch die Drehmomentübertragungsgegenstruktur je eine männliche und eine weibliche komplementäre Struktur aufweisen. Das kann den Effekt liefern, dass der Kraftfluss, ausgehend von den jeweiligen Kraftübertragungsmitteln, gleichmäßig in die Mutter bzw. in das Betätigungselement einwirken kann.

Vorzugsweise kann die Drehmomentübertragungsstruktur an zumindest einem Führungselement angeordnet sein, wobei die oder das Führungselement(e) in Ausnehmungen der Mutter geführt sein können. Die Drehmomentübertragungsstruktur kann einstückig mit zumindest einem Führungselement ausgebildet sein, insbesondere mit zumindest einem Führungselement verklebt, verschweißt, verklemmt oder durch sonstige Weise gefügt sein. Dadurch kann eine von außen aufbringbare Kraft entlang der Längsrichtung von der Feder über zumindest ein Führungselement auf die Drehmomentübertragungsstruktur übertragen werden. Anders gesagt kann das Führungselement ein Kraftübertragungsmittel sein. Die Mutter kann vorzugsweise längliche Ausnehmungen aufweisen, welche insbesondere am Innengewinde der Mutter entlang der Längsrichtung angeordnet sind und sich von innerhalb nach außerhalb der Mutter erstrecken. Dadurch kann sich das zumindest eine Führungselement mittels der zumindest einen Ausnehmung durch die Mutter hindurch erstrecken. Des Weiteren kann eine Verdrehung der Führungselemente um die Längsrichtung durch die länglichen Ausnehmungen gehemmt werden. Genauer gesagt kann ein Drehmoment der Drehmomentübertragungsstruktur über Führungselemente und die Ausnehmungen in die Mutter bzw. den Mutterkorpus übertragen werden und umgekehrt.

Vorzugsweise kann das Führungselement dazu ausgestaltet sein, mit einem Betätigungsring in Kontakt zu treten, insbesondere mit dem Betätigungsring verklemmt, verklebt, verschweißt, verlötet oder in sonstiger Weise verbunden zu werden. Der Betätigungsring kann an einem Ende der Führungselemente angeordnet sein, welches distal zu dem Ende ist, das mit der Drehmomentübertragungsstruktur in Kontakt steht oder bringbar ist. Der Betätigungsring kann dazu ausgestaltet sein, eine Kraft entlang der Längsrichtung aufzunehmen und gleichmäßig an alle damit in Kontakt stehenden Führungselemente weiterzuleiten. Insbesondere können die Führungselemente reversibel mit dem Betätigungsring kontaktiert sein. Dadurch kann eine zerstörungsfreie Demontage der Baugruppe der Mutter erfolgen. Darüber hinaus kann der Betätigungsring eine Verlagerung der Drehmomentübertragungsstruktur über die Endstellung der Sekundärstellung hinaus begrenzen. Ferner kann das Betätigungselement mit zumindest einer Feder in Kontakt stehen oder bringbar sein.

Vorzugsweise kann die als männlich ausgebildete Drehmomentübertragungsstruktur und/oder vorzugsweise können die als männlich ausgebildete Drehmomentübertragungsgegenstruktur als Eingriffsstifte ausgebildet sein, und wobei die als weiblich ausgebildete Drehmomentübertragungsgegenstruktur und/oder Drehmomentübertragungsstruktur als komplementäre weibliche Löcher, insbesondere als Durchgangslöcher, ausgebildet sein können. Ein Eingriffsstift kann eine längliche, insbesondere zylindrische, Erstreckung aufweisen. Vorzugsweise kann ein Eingriffsstift aus Metall, insbesondere aus dem gleichen Material wie die Mutter, gefertigt werden. Dadurch kann die Korrosionsbeständigkeit zwischen einem Eingriffsstift und seinen Kontaktpartnern, wie die Mutter, gesteigert werden. Ein Loch kann derart ausgestaltet sein, dass der Eingriffsstift in das Loch einfassen kann. Folglich kann ein Drehmoment zwischen Loch und Eingriffsstift übertragen werden. Des Weiteren kann die Passung zwischen Eingriffsstift und Loch eine Spielpassung oder Übergangspassung sein. Dadurch kann eine einfache Lösbarkeit des Formschlusses erzielt werden.

Vorzugsweise können die Löcher der als Löcher ausgebildeten Drehmomentübertragungsstruktur oder Drehmomentübertragungsgegenstruktur in einem gleichen Winkelabstand zueinander radial um die Längsrichtung an dem Betätigungselement und/oder an der Mutter angeordnet sein. Mit anderen Worten können die Löcher, die die Drehmomentübertragungsstruktur oder Drehmomentübertragungsgegenstruktur ausbilden, auf einem Kreisbogen mit konstantem Durchmesser liegen, wobei die Abstände zwischen den Löchern jeweils gleich groß sind. Dadurch können unterschiedliche Winkelpositionen zwischen der Mutter und dem Betätigungselement realisiert werden, indem ein Eingriffsstift in jedes der auf der Kreisbahn komplementär angeordneten Löcher eingreifen kann.

Vorzugsweise können die Eingriffsstifte eine Verzahnung an einem distalen Ende, insbesondere in Längsrichtung, aufweisen. Die Verzahnung kann in Längsrichtung hervorragen. Hierdurch kann eine besonders einfache und mit nur geringem Gewicht ausgestattete Verzahnung realisiert werden. Dies hat besonders vorteilhafte Eigenschaften in Hinblick auf das Schwindungsverhalten.

Vorzugsweise kann zumindest einer der Eingriffsstifte an einem Ende ein Kopfelement aufweisen, welches insbesondere verschraubt, verklebt, verschweißt, verklemmt, verlötet oder in sonstiger Weise befestigt sein kann. Insbesondere kann das Kopfelement reversibel lösbar angeordnet sein oder anordenbar sein. Dadurch kann der Zusammenbau der Baugruppe der Mutter erleichtert und der Fertigungsaufwand reduziert werden. Das Kopfelement kann einen Durchmesser aufweisen, welcher größer als der Durchmesser des Rests des Eingriffsstiftes ist. Dadurch kann das Kopfelement dazu ausgestaltet sein, mit einer Feder in Kontakt zu treten oder in Kontakt bringbar zu sein. Des Weiteren kann das Kopfelement ein Kraftangriffspunkt für Normalkräfte sein, die in Längsrichtung auf den Eingriffsstift wirken.

Vorzugsweise kann das Kopfelement zylindrisch oder flügelartig ausgestaltet sein, und/oder insbesondere eine Anschlagsfläche ausbilden. Eine zylindrische Ausgestaltung kann auch eine rotationssymmetrische Ausformung des Kopfelements bedeuten. Hierdurch kann eine einfache Fertigung erreicht werden. Eine flügelartige Ausgestaltung kann in Form einer Flügelmutter ausgeführt sein. Insbesondere bei einer reversibel lösbaren Verbindung zwischen Eingriffsstift und Kopfelement kann diese vorteilhaft gelöst oder fixiert werden. Eine flügelartige Ausgestaltung setzt daher insbesondere die Vorsehung von Flügelstrukturen oder -elementen voraus. Eine Anschlagsfläche kann sich an dem Ende des Kopfelements befinden, welche der Feder abgewandt ist. Die Anschlagsfläche kann dazu ausgestaltet sein, normal auf das Kopfelement wirkende Kräfte in den Eingriffsstift einzuleiten, wobei diese Kräfte insbesondere durch ein Werkzeug ausgeübt werden können.

Vorzugsweise können die Eingriffsstifte in jeweils einer Ausnehmung der Mutter, insbesondere des Mutterkorpus, angeordnet sein und wobei die Ausnehmungen einen variablen Durchmesser entlang der Längsrichtung aufweisen. Die Ausnehmung kann dem Loch der Mutter oder einem Teilbereich des Loches der Mutter entsprechen. Damit ist insbesondere jenes Loch gemeint, in welches eine Gegenstruktur zum Eingriffsstift ausbildet. Die Ausnehmung kann eine im Wesentlichen zylindrische, insbesondere runde, weiter insbesondere rotationssymmetrische Ausgestaltung, aufweisen. Dadurch können Formelemente innerhalb der Ausnehmung, insbesondere ein Eingriffsstift, drehbar darin gelagert sein. Die Ausnehmung kann derart ausgestaltet sein, dass der Eingriffsstift parallel zur Längsrichtung innerhalb der Ausnehmung verlagert werden kann oder verlagerbar ist. Ein variabler Durchmesser kann bedeuten, dass die Ausnehmung eine Verengung des Durchmessers, vorzugsweise einen konischen Verlauf, weiter bevorzugt einen Anschlag und/oder eine Stufe aufweisen kann. Das kann zur Folge haben, dass die Relativbewegung des Eingangsstiftes innerhalb der Ausnehmung eine Endposition, insbesondere in der Primärstellung und/oder Sekundärstellung der Mutter, erreichen kann. Mit anderen Worten kann die Verlagerung des Eingriffsstiftes innerhalb der Ausnehmung in einer Parallelen zur Längsrichtung beschränkt werden. Ein konischer Verlauf der Ausnehmung kann auch zur Folge haben, dass der Eingriffsstift in einer Endposition eingeklemmt und darin gehalten werden kann.

Vorzugsweise können die Eingriffsstifte einen variablen Durchmesser aufweisen und/oder komplementär zu den Ausnehmungen ausgestaltet sein. Die Eingriffsstifte können eine Erhebung aufweisen, welche als Anschlag mit der komplementären Verengung, dem konischen Verlauf oder dem Anschlag der Ausnehmung in Kontakt bringbar sein kann oder in Kontakt stehen kann.

Vorzugsweise kann die Verlagerung der Eingriffsstifte von der Sekundärstellung zur Primärstellung oder umgekehrt durch distale Endpositionen in Längsrichtung begrenzt sein. In anderen Worten oder alternativ kann die Beweglichkeit des oder der Eingriffsstifte in Längsrichtung formschlüssig, insbesondere durch einen Kontakt mit dem Mutterkorpus, begrenzt sein. Diese Begrenzung kann in positive und negative Längsrichtung vorgesehen sein. Insbesondere kann der Bewegungsfreiheitsgrad der Eingriffsstifte entlang einer Parallelen zur Längsrichtung teilweise begrenzt sein, insbesondere vollständig begrenzt sein. Bei einer teilweisen Begrenzung kann ein Eingriffselement relativ zur Mutter entlang der Parallelen zur Längsrichtung in nur eine Richtung unbeschränkt verlagert werden. Bei einer vollständigen Begrenzung kann insbesondere keine Relativbewegung erfolgen, sodass der Eingriffsstift an der Mutter nicht verlagerbar angeordnet sein kann.

Erfindungsgemäß kann das Betätigungselement eine exzentrische Außenstruktur aufweisen und/oder wobei das Betätigungselement einen Zentraldurchbruch aufweist, der sich in die Längsrichtung erstreckt. Die exzentrische Außenstruktur berandet das Betätigungselement insbesondere außenumfänglich. In anderen Worten ist die radiale Erstreckung in Bezug zur Längsrichtung (daher senkrecht zur Längsrichtung) des Bestätigungselements durch die Außenstruktur berandet. Die Außenstruktur dient dazu, mit einem weiteren Element in Kontakt zu treten, um so eine Einstellmöglichkeit zu erreichen. Das Betätigungselement bzw. die Außenstruktur, welche grundlegend auch als Außenkontur bezeichnet werden kann, kann vorzugsweise eine scheibenförmige, vorzugsweise eine elliptische, weiter bevorzugt eine runde Geometrie aufweisen. Ebenso können das Betätigungselement bzw. die Außenstruktur nicht nur auf die genannten Geometrien beschränkt sein. Beispielsweise ist auch eine rechteckige Geometrie mit insbesondere abgerundeten Ecken denkbar. Der Zentraldurchbruch kann durch das Betätigungselement in Längsrichtung vollständig hindurchführen. Dadurch kann ein zusätzliches Bauteil, vorzugsweise ein rotationssymmetrisches Bauteil, bzw. ein Bolzen, relativ zum Betätigungselement oder umgekehrt drehbar angeordnet sein. Ein Innendurchmesser des Durchbruchs kann derart ausgestaltet sein, dass das Betätigungselement auf das zusätzliche Bauteil, insbesondere den Bolzen, geschoben werden kann. Der Zentraldurchbruch kann relativ zum Mittelpunkt des Betätigungselements exzentrisch, insbesondere vom Mittelpunkt beabstandet, angeordnet sein. Das kann den Effekt liefern, dass der Abstand zwischen der Zentralbohrung und der Außenkontur bzw. der Außenstruktur bei der Drehung des Betätigungselements variierbar sein kann.

Vorzugsweise kann das Betätigungselement eine Primärseite und eine Sekundärseite aufweisen, wobei die Primärseite mit der Mutter in Kontakt bringbar sein oder in Kontakt stehen kann. Die Primärseite kann komplementär zur Geometrie der Mutter ausgestaltet sein. Mit anderen Worten kann die Mutter in das Betätigungselement an der Primärseite eingreifen. Insbesondere kann die Drehmomentübertragungsstruktur in der Sekundärstellung der Mutter mit der Drehmomentübertragungsgegenstruktur der Primärseite des Betätigungselements eingreifen. Des Weiteren kann die Primärseite eine Erhebung entlang der Längsrichtung aufweisen, sodass sich die Erhebung ausgehend von dem Zentraldurchbruch erstreckt, insbesondere mittels einer Rundung in das Betätigungselement übergeht. Mit anderen Worten kann die Erhebung von der Primärseite hervorstehen. Dadurch kann die an dem Betätigungselement anliegende Mutter geführt werden. Die Sekundärseite kann gegenüberliegend von der Primärseite angeordnet sein. Insbesondere kann die Sekundärseite eine ebene Fläche sein, welche in einem Abstand radial zum Zentraldurchbruch zurückgesetzt sein kann, insbesondere eine Stufe aufweisen kann. Dadurch kann die Auflagefläche des Betätigungselements an einer Fahrwerksvorrichtung, die an der Sekundärseite angrenzt, reduziert werden.

Vorzugsweise kann das Betätigungselement eine Eingriffsstruktur aufweisen, welche radial von dem Zentraldurchbruch beabstandet sein kann. Insbesondere kann die Eingriffsstruktur an der Primärseite angeordnet sein. Ferner kann die Eingriffsstruktur als Vertiefung, insbesondere als Durchbruch, ausgestaltet sein. Mit anderen Worten kann die Eingriffsstruktur mit einem Formelement, vorzugsweise einem Element einer Achsvorrichtung, weiter bevorzugt einem Arretierungsmittel, wechselwirken. Alternativ oder zusätzlich kann die Eingriffsstruktur mit einem Werkzeug in Eingriff gebracht werden kann. Mittels der Eingriffsstruktur kann erreicht werden, dass das Betätigungsmittel relativ zu einem angrenzenden Element einer Fahrwerkskomponenten verschoben oder verdreht wird, wenn das Betätigungselement um die Längsrichtung gedreht wird. Dadurch kann eine Einstellung der Fahrwerksvorrichtung erfolgen, insbesondere eine Spureinstellung einer Fahrzeugachse durchgeführt werden. Genauer gesagt ist insbesondere das Betätigungselement dazu ausgestaltet, um die Spur eines Fahrzeugs einzustellen. Ferner kann die Eingriffsstruktur eine quadratische Ausgestaltung aufweisen. Ebenso sind Ausgestaltungen in Form eines Sterns, insbesondere Torx, denkbar. Dadurch kann das Betätigungselement, beispielsweise mittels des Werkzeugs, in einer gewünschten Position gehalten werden, während die Mutter in der Primärstellung gedreht wird. Dadurch kann eine Relativposition des Betätigungselements zu der Fahrwerkskomponente während des Anziehens der Mutter gesichert werden. Des Weiteren kann eine Erhebung außenumfänglich an der Eingriffsstruktur angeordnet sein, welche sich zu der Primärseite des Betätigungselements erstreckt. Mit anderen Worten kann die Eingriffsstruktur von der Primärseite hervorstehen.

Vorzugsweise kann das Montagesystem einen Bolzen umfassen, wobei sich der Bolzen insbesondere durch die Mutter und/oder das Betätigungselement erstrecken kann. Der Bolzen kann ein Außengewinde, insbesondere der Größen M6 bis M22, aufweisen. Der Bolzen erstreckt sich vorzugsweise durch die Ausnehmung und/oder weist ein Gewinde auf, dass insbesondere mit dem Innengewinde der Mutter in Eingriff steht oder bringbar ist. Weiterhin kann das Betätigungselement auf den Bolzen geschoben und anschließend mit der Mutter verschraubt werden. Des Weiteren kann der Bolzen einen Kopf aufweisen, welcher sich an dem distal zur Mutter angeordneten Ende befinden und mit einem Werkzeug oder einer komplementären Struktur eingreifen kann. Dadurch kann der Bolzen zumindest mittels eines Werkzeugs verdrehsicher fixiert werden, während die Mutter angezogen wird.

Gemäß eines weiteren Aspekts der Erfindung wird ein Betätigungswerkzeug bereitgestellt, dass dazu ausgestaltet ist, mit einer Mutter eines Montagesystems einzugreifen, insbesondere mit einer Betätigungsfläche der Mutter in Kontakt bringbar zu sein, wobei zumindest ein Einstellelement mit zumindest einem Verlagerungselement in Kontakt steht, wobei das Einstellelement dazu ausgestaltet ist, eine Positionsänderung des Verlagerungselements zu bewirken, wobei das Verlagerungselement mit der Mutter in Kontakt bringbar ist, insbesondere wenn das Betätigungswerkzeug außenumfänglich um die Mutter greift, wobei das Betätigungswerkzeug ein Kupplungselement an einem distalen Ende aufweist.

Vorzugsweise kann das Betätigungswerkzeug aus einem metallischen Werkstoff gefertigt sein, bevorzugt eine Eisenlegierung, weiter bevorzugt Stahl, umfassen.

Mittels eines metallischen Werkstoffs kann das Betätigungselement hohe Drehmomente tolerieren, wie sie für Fahrwerkskomponenten üblich sind. Das Betätigungswerkzeug kann eine im Wesentlichen runde, insbesondere zylindrische Form aufweisen. Dadurch kann das Betätigungselement leicht um die Mutter herum angeordnet werden. Das Betätigungselement kann eine Innenseite aufweisen, die mit der Betätigungsfläche der Mutter eingreifen kann, insbesondere ein Drehmoment zur oder von der Mutter übertragen kann. Die Mutter kann ein oder mehrere, insbesondere mehr als zwei, Einstellelemente umfassen, welche durch einen Auslass des Betätigungselements durch eine Wand des Betätigungselements hindurchführen können. Die Einstellelemente können außerhalb des Betätigungswerkzeugs als Hebel ausgeführt sein. Dadurch können die Einstellelemente durch einen Anwender manipuliert, insbesondere in eine freie Position und in einer Eingriffsposition gebracht werden. Das Einstellelement steht mit einem Verlagerungselement in Kontakt, vorzugsweise ist das Einstellelement mit dem Verlagerungselement gelenkig verbunden. Dadurch können Manipulationen durch einen Anwender von dem Einstellelement auf das Verlagerungselement übertragen werden. Mit anderen Worten kann der Anwender das Verlagerungselement räumlich verlagern. Ist das Betätigungswerkzeug auf der Mutter aufgebracht und mit der Mutter in Eingriff, so kann das Verlagerungselement die Mutter kontaktieren. Genauer gesagt kann das Verlagerungselement eine Einstellvorrichtung der Mutter derart kontaktieren, dass die Mutter von einem Zustand in einen anderen Zustand überführt werden kann. Genauer gesagt kann die freie Position des Betätigungswerkzeugs eine Verlagerung der Mutter in eine Primärposition der Mutter hervorrufen. Die Eingriffsposition des Betätigungswerkezeugs kann eine Verlagerung der Mutter in eine Sekundärposition der Mutter hervorrufen. Das Kupplungselement des Betätigungswerkzeugs kann dabei an einem Ende distal zu der Seite angeordnet sein, welche mit der Mutter eingreifen kann. Ferner ist das Kupplungselement durch eine Struktur gekennzeichnet, die dazu ausgestaltet ist, ein Werkzeug aufzunehmen, bevorzugt einen Vierkant, weiter bevorzugt einen Torx, aufweist. Die Strukturen können sowohl nach innen, als auch nach außen führen. Mit anderen Worten können die Strukturen männlich, als auch weiblich ausgestaltet sein.

Gemäß einem weiteren Aspekt der Erfindung wird ein Fahrzeug, insbesondere ein Nutzfahrzeug, mit einem Montagesystem bereitgestellt, das mit dem Montagesystem an dem Fahrzeug arretiert und/oder befestigt ist. Bei dem Fahrzeug kann es sich insbesondere um ein Nutzfahrzeug handeln, vorteilhafterweise mit einem zulässigen Gesamtgewicht von mehr als 7,5 Tonnen, bevorzugt von mehr als 15 Tonnen, besonders bevorzugt von mehr als 40 Tonnen. Des Weiteren kann auch ein Anhänger als Fahrzeug umfasst sein, insbesondere ist das Nutzfahrzeug ein Anhänger, insbesondere ein Sattelauflieger. Ein Fahrzeug, Nutzfahrzeug oder ein Anhänger können mehr als zwei Achsen umfassen. Das Montagesystem kann vorzugsweise an einer Achskomponente des Fahrzeugs angeordnet sein. Insbesondere kann das Montagesystem zur Arretierung einer Achskomponente zum Rahmen des Fahrzeugs mit dem Fahrzeug verbunden oder verbindbar sein. Die Achskomponente kann insbesondere ein Längslenker und/oder ein Haltebock sein oder umfassen.

Gemäß einem weiteren Aspekt ist eine Verwendung eines Montagesystems, insbesondere wie vorhergehend oder nachfolgend beschrieben, und/oder eines Betätigungswerkzeugs, insbesondere wie vorhergehend oder nachfolgend beschrieben, zur Fixierung oder zur Einstellung eines Fahrwerkteils, insbesondere eines Fahrwerkteils eines Nutzfahrzeugs. Die Einstellung kann eine Spureinstellung des Fahrzeugs umfassen. Dadurch kann die Spurtreue der einzelnen Fahrzeugachsen, insbesondere der Gleichlauf der Fahrzeugachsen, eingestellt werden.

Des Weiteren betrifft die Erfindung ein Verfahren zur Einstellung der Spur unter Nutzung eines Montagesystems, insbesondere wie vorhergehend oder nachfolgend beschrieben, und/oder eines Betätigungswerkzeugs, insbesondere wie vorhergehend oder nachfolgend beschrieben. Das Verfahren kann in einem ersten Schritt die Anbringung der Montagevorrichtung zwischen einem Rahmenelement, beispielsweise einen Längsträger des Leiterrahmens, und einem Halteelement einer Fahrzeugsachse vor. Beide Elemente (Rahmenelement und Halteelement) werden mittels eines Bolzens arretiert. Auf der Gewindeseite des Bolzens kann das Betätigungselement auf den Bolzen geschoben werden und darauf die Mutter positioniert werden. Es können auch weitere Zwischenelemente, wie Zwischenscheiben, insbesondere Beilagscheiben, an verschiedenen Positionen vorgesehen sein. Die Mutter kann mittels eines Betätigungswerkzeugs, insbesondere wie vorhergehend und/oder nachfolgend beschrieben, in einer freien Position des Betätigungswerkzeugs angezogen werden, sodass die beiden Elemente vorgespannt sind. Die Ausrichtung der Fahrzeugachse erfolgt dadurch, dass das, insbesondere exzentrische, Betätigungselement relativ zum Bolzen gedreht wird, insbesondre gleichsinnig mit der Mutter gedreht wird. Dazu kann das Betätigungswerkzeug in eine Eingriffsposition verbracht werden. Durch die Drehung des exzentrischen Betätigungselement, das sich insbesondere relativ zum Rahmenelement abstützt, kann die Achse relativ zum Rahmenelement derart gedreht werden, dass die Ausrichtung der Achse quer zum Fahrzeug gedreht wird. Ist die Fahrzeugachse gemäß der gewünschten Einstellwerte korrekt ausgerichtet, so kann die Mutter auf ein vorgegebenes Drehmoment angezogen werden, indem das Betätigungselement in der freien Position entsprechend gedreht wird.

Einzelne Ausführungsformen und Merkmale können mit anderen Ausführungsformen und anderen Merkmalen kombiniert werden und so neue Ausführungsformen bilden. Ausgestaltungen und Vorteile der Ausführungsformen und der Merkmale gelten analog auch für die neuen Ausführungsformen. Ferner gelten Ausgestaltungen und Vorteile, die in Verbindung mit einer Vorrichtung genannt wurden analog auch für andere Vorrichtungen und/oder das Verfahren und anders herum.

Im Folgenden werden Ausführungsformen der vorliegenden Erfindung unter Bezugnahme auf die beigefügten Figuren im Detail beschrieben. Dabei zeigen:
- **Fig. 1**: Darstellung der Montagevorrichtung gemäß einer Ausführungsform der vorliegenden Erfindung,
- **Fig. 2**: Darstellung der Mutter gemäß einer Ausführungsform der vorliegenden Erfindung in einem Querschnitt entlang einer Ebene, die die Längsrichtung enthält,
- **Fig. 3**: Darstellung der Mutter gemäß einer anderen Ausführungsform der vorliegenden Erfindung in einem Querschnitt entlang einer Ebene, die die Längsrichtung enthält,
- **Fig. 4**: Darstellung der Mutter im Eingriff mit dem Betätigungswerkzeug in der Primärstellung gemäß einer Ausführungsform der vorliegenden Erfindung in einem Querschnitt entlang einer Ebene, die die Längsrichtung enthält,
- **Fig. 5**: Darstellung der Mutter im Eingriff mit dem Betätigungselement in der Primärstellung gemäß einer Ausführungsform der vorliegenden Erfindung in einem Querschnitt entlang einer Ebene, die die Längsrichtung enthält,
- **Fig. 6**: Darstellung des Betätigungswerkzeugs gemäß einer Ausführungsform der vorliegenden Erfindung in einem Querschnitt entlang einer Ebene, die die Längsrichtung enthält,
- **Fig. 7**: Darstellung des Betätigungswerkezugs gemäß einer Ausführungsform der vorliegenden Erfindung,
- **Fig. 8**: Darstellung des Betätigungswerkezugs gemäß einer anderen Ausführungsform der vorliegenden Erfindung.

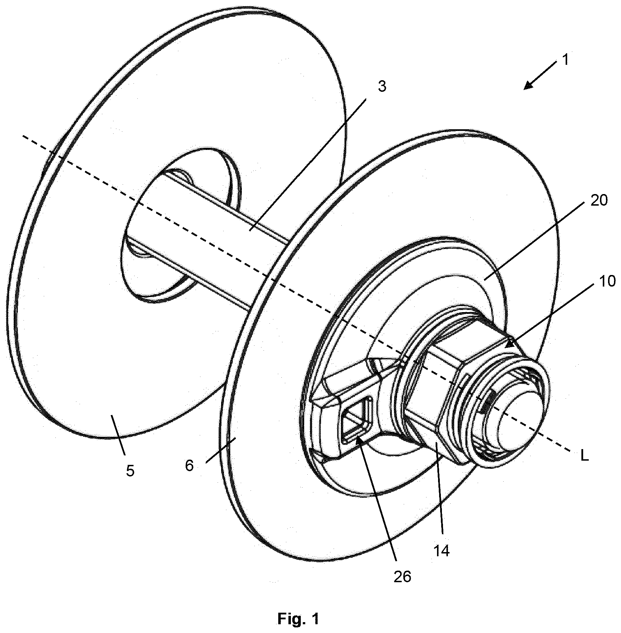

**Fig. 1** zeigt ein Montagesystem 1, wobei das Montagesystem 1 in einer in üblicher Weise vorliegenden Einbauform dargestellt ist. Entlang der Längsrichtung L ist ein Bolzen 3 ausgerichtet, worauf eine erste Zwischenscheibe 5, insbesondere Beilagscheibe, auf den Kopf des Bolzens 3 aufgeschoben ist. In einem dargestellten Zwischenraum zwischen der ersten und einer zweiten Zwischenscheibe 6, insbesondere zweiten Beilagscheibe, kann ein Fahrwerkselement, insbesondere ein Längslenker, (nicht dargestellt) angeordnet sein. An der zweiten Zwischenscheibe 6 ist das Montagesystem 1 derart ausgebildet, dass das Betätigungselement 20 die zweite Zwischenscheibe 6 kontaktiert. Wird die Mutter 10 des Montagesystems 1 weiter auf den Bolzen 3 aufgeschraubt, so kann eine Klemmwirkung zwischen den beiden Zwischenscheiben 5 und 6 bewirkt werden und die in Fig. 1 dargestellte Anordnung an der Fahrwerksvorrichtung fixiert, insbesondere verdrehsicher gelagert, werden. Darüber hinaus weist die dargestellte Mutter 10 einen außenumfänglichen Betätigungsbereich 14 auf, welcher dazu ausgestaltet ist, mit einem komplementären Element, bevorzugt mit einem Betätigungswerkzeug, (nicht dargestellt) einzugreifen. Das Betätigungselement 20 kann relativ auf den Bolzen 3 aufgeschraubt werden oder diesen lediglich aufnehmen und/oder umgeben. Dabei kann die Mutter 10 in einem Primärzustand relativ zu dem Betätigungselement 20 drehbar sein und in einem Sekundärzustand gemeinsam mit dem Betätigungselement 20 relativ zu dem Bolzen 3 drehbar sein.

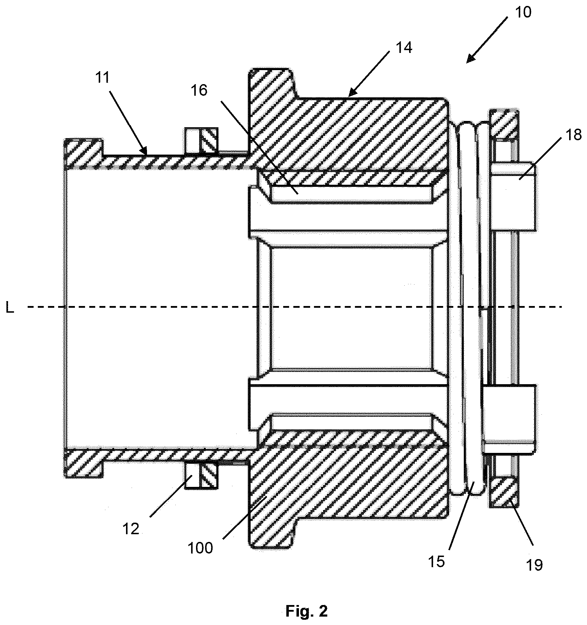

**Fig. 2** zeigt einen Querschnitt der Mutter 10 gemäß einer Ausführungsform entlang einer Ebene, in der die Längsrichtung L liegt. An der Mutter 10 ist die Drehmomentübertragungsstruktur 12 umfänglich, und insbesondere entlang der Längsrichtung L verschieblich, angeordnet. Ferner weist die Ausführungsform der Fig.2 einen Vorsprung 11 entlang der Längsrichtung L der Mutter 10 auf, welcher insbesondere als rotationssymmetrisches Element von der Mutter 10 hervorsteht. Wie in Fig. 2 dargestellt, kann eine relative Verschiebung zwischen Mutter 10 und Drehmomentübertragungsstruktur 12 entlang der Längsrichtung L möglich sein. Die Drehmomentübertragungsstruktur 12 weist insbesondere eine Eingriffsstruktur an einem distalen Ende auf, die als Verzahnung ausgestaltet sein kann. Gemäß der Ausführungsform in Fig. 2 kann die Drehmomentübertragungsstruktur 12 eine Vielzahl von radial angeordneten Führungselementen 18 aufweisen, die sich parallel zur Längsrichtung L erstrecken. Mittels der Führungselemente 18 erstreckt sich die Drehmomentübertragungsstruktur 12 von einer umfänglichen Außenfläche des Mutterkorpus 100 durch diese hindurch und kontaktiert den Mutterkorpus 100 an innenliegenden Ausnehmungen 16. Dabei sind die Ausnehmungen 16 komplementär zu den Führungselementen 18 ausgestaltet, insbesondere kann die Paarung als Spiel- oder Übergangspassung ausgestaltet sein, sodass die beschriebene relative Verschiebung zwischen Mutterkorpus 100 und Drehmomentübertragungsstruktur 12 möglich sein kann. Des Weiteren erstrecken sich die Führungselemente 18 über den Mutterkorpus 100 parallel zur Längsrichtung L hinaus, um dort mit einem Betätigungsring 19 einzugreifen, insbesondere mit dem Betätigungsring 19 vorzugsweise Formschlüssig verbunden zu sein. Dazu können die Führungselemente 18 außenumfängliche Nuten oder Einkerbungen aufweisen, worin der Betätigungsring 19 eingreifen kann. Alternativ oder zusätzlich kann diese Verbindung auch durch Verkleben, Verschweißen, Verpressen oder in sonstiger Weise erfolgen. Unterhalb des Betätigungsrings 19 ist eine Feder 15 angeordnet, die eine Federkraft entlang der Längsrichtung L zwischen Betätigungsring 19 und Mutter 10 bzw. Mutterkorpus 100 bewirkt. Dadurch wird der Betätigungsring 19 in einer Endposition relativ zur Mutter 10 gebracht. Daher befindet sich auch die Drehmomentübertragungsstruktur 12 in einer Endposition, die auch als Primärposition bezeichnet wird.

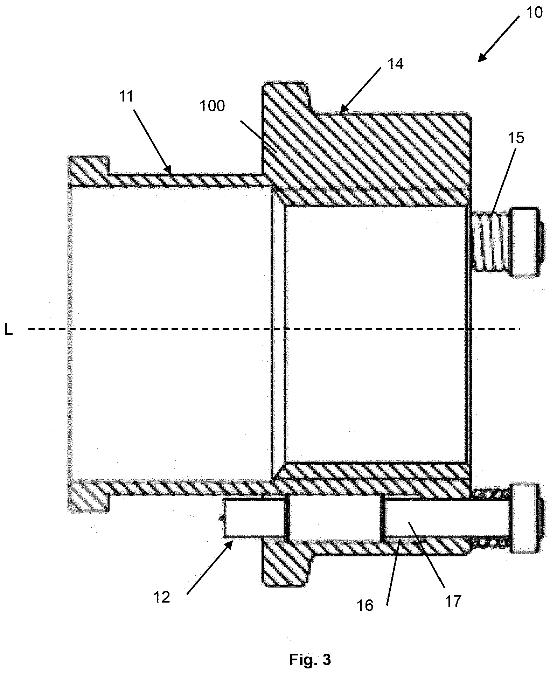

**Fig. 3** zeigt einen Querschnitt einer weiteren Ausführungsform der Mutter 10 der vorliegenden Erfindung. Die Ausnehmungen 16 sind gemäß der Fig. 3 als Löcher mit einem variablen Durchmesser ausgeführt. Die Drehmomentübertragungsstruktur 12 greift in diese Löcher ein, wobei die Drehmomentübertragungsstruktur 12 in dem gezeigten Ausführungsbeispiel als eine Vielzahl von Eingriffsstiften 17 ausgestaltet ist. An einem distalen Ende können die Eingriffsstifte 17 eine Verzahnung aufweisen. An dem dazu gegenüberliegenden Ende ist ein Kopf an je einem der Eingriffsstifte 17 angeordnet, welcher als zusätzliches Element anbringbar, insbesondere aufschraubbar ausgeführt gezeigt ist. Zwischen Verzahnung und Kopf weist der Eingriffsstift 17 eine Verdickung des Durchmessers auf, welche derart ausgestaltet ist, dass sie an dem komplementär ausgestalteten variablen Durchbruch der Mutter 10 oder des Mutterkorpus 100 anschlagen kann. Ferner ist zwischen jedem Kopf eines Eingriffselements und der Mutter 10 bzw. dem Mutterkorpus 100 je eine Feder 15 angeordnet, die eine Federkraft parallel zur Längsrichtung L zwischen Eingriffsstift 17 und Mutter 10 bzw. Mutterkorpus 100 bewirken kann. Dadurch werden die Eingriffsstifte 17 in einer Endposition relativ zur Mutter 10 bzw. Mutterkorpus 100 gebracht. Daher befindet sich auch die Drehmomentübertragungsstruktur 12 in einer Endposition, die auch als Primärposition bezeichnet wird. Ferner weist die Ausführungsform der Fig.3 einen Vorsprung 11 entlang der Längsrichtung des Mutterkorpus 100 auf, welcher als rotationssymmetrisches Element von dem Mutterkorpus 100 hervorsteht.

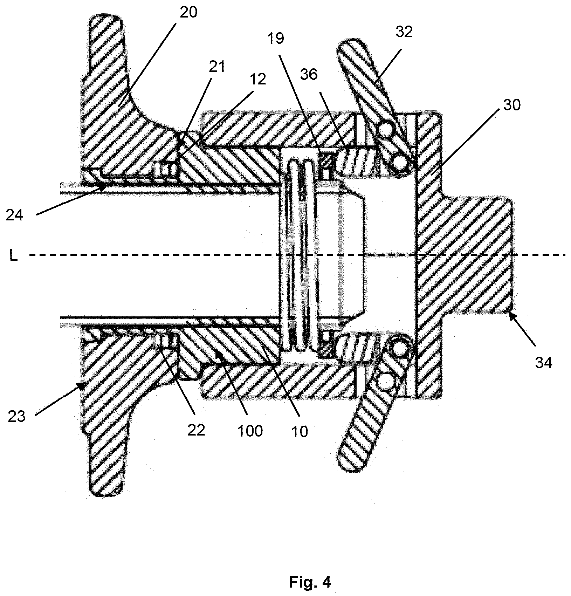

**Fig. 4** zeigt einen Querschnitt des Montagesystems 1, wobei die gezeigte Ausführungsform im Eingriff mit einem Betätigungswerkzeug 30 steht. Das dargestellte Betätigungselement 20 ist an einem gegenüberliegenden Ende der Mutter 10 zu dem Ende der Mutter 10 orientiert, woran das Betätigungswerkzeug 30 in Fig. 4 angebracht ist. Das Betätigungselement 20 weist eine Drehmomentübertragungsgegenstruktur 22 auf, welche derart ausgestaltet ist, um mit der Drehmomentübertragungsstruktur 12 der Mutter 10 einzugreifen. Mit anderen Worten kann die Drehmomentübertragungsgegenstruktur 22 eine komplementäre Verzahnung zur Drehmomentübertragungsstruktur 12 aufweisen. Der Bolzen 3 erstreckt sich durch einen Zentraldurchbruch 24 durch das Betätigungselement 20 hindurch. Anders beschrieben ist das Betätigungselement 20 auf den Bolzen 3 aufgeschoben. Das Betätigungswerkzeug 30 ist mit dem außenumfänglichen Betätigungsbereich 14 der Mutter 10 derart in Eingriff, dass das Betätigungswerkzeug 30 die Mutter 10 außenumfänglich umgibt und formschlüssig ein Drehmoment auf die Mutter 10 ausüben kann. Dabei weist das Betätigungswerkzeug 30 außen angeordnete Einstellelemente 32 auf, welche in der gezeigten Ausführungsform als Hebel ausgestaltet sind. Das Einstellelemente 32 führt in das Betätigungswerkzeug 30 hinein und ist gelenkig, insbesondere über ein Gelenk, mit einem Verlagerungselement 36 verbunden. Das Verlagerungselement 36 ist wiederum derart in dem Betätigungselement 30 ausgerichtet, dass es den Betätigungsring 19 der Mutter 10 kontaktiert. Eine Bewegung der Einstellelemente 32 um die gelenkige Anordnung kann dazu führen, dass das Verlagerungselement 36 die Betätigungsscheibe 19 verlagert und dadurch die Drehmomentübertragungsstruktur 12 in Eingriff mit der Drehmomentübertragungsgegenstruktur 22 gebracht wird. Mit anderen Worten kann dadurch der Übergang von der Primärstellung in die Sekundärstellung beschrieben bzw. erreicht werden. Ferner weist das Betätigungswerkzeug 30 ein Kupplungselement 34 an einer der Seiten auf, die von der Mutter 10 beabstandet ist. Dadurch kann das Betätigungswerkzeug 30 mit einem Werkzeug, insbesondere über einen Vierkant, alternativ oder bevorzugt einen Torx eingreifen.

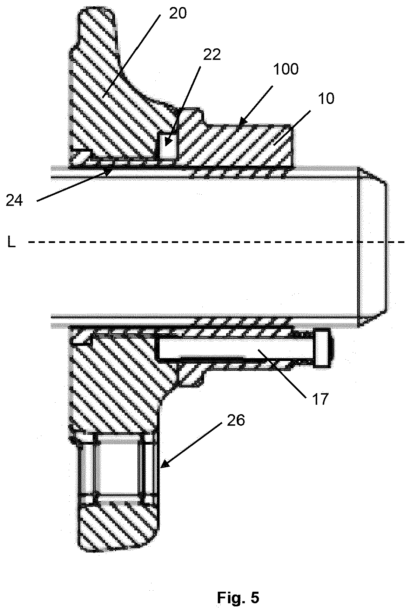

**Fig. 5** zeigt einen Querschnitt des Montagesystems 1 anhand einer weiteren Ausführungsform der vorliegenden Erfindung. Die dargestellte Mutter 10 entspricht insbesondere der Mutter 10 jener Ausführungsform, welche bereits in Fig. 3 dargestellt wurde. Eine formschlüssige Verbindung zwischen der Mutter 10 und dem Betätigungselement 20 kann, wie in Fig. 5 dargestellt, durch die Eingriffsstifte 17 erfolgen, welche in der Sekundärposition in die Drehmomentübertragungsgegenstruktur 22 des Betätigungselements 20 eingreifen. Des Weiteren ist die Eingriffsstruktur 26 als vollständiger Durchbruch durch das Betätigungselement 20 ausgeführt.

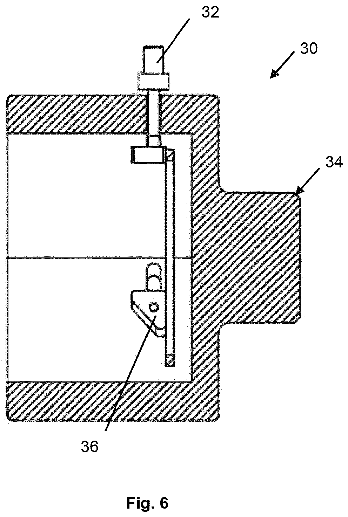

**Fig. 6** zeigt den Querschnitt eines Montagewerkzeugs 30 gemäß einer weiteren Ausführungsform. Die Einstellelemente 32 sind in dieser Ausführungsform entlang radial verlaufender Durchbrüche, insbesondere Schlitzen, verlagerbar. Mit anderen Worten können die Einstellelemente 32 um eine Mittelachse des Betätigungswerkzeugs 30 rotiert werden. In Fig. 6 sind die Verlagerungselemente 36 nicht gelenkig, sondern unbeweglich, mit den Einstellelementen 32 verbunden. Insbesondere können das Verlagerungselement 26 und das Einstellelemente 32 einstückig ausgebildet sein. Folglich kann der Fertigungsaufwand reduziert werden. Ferner weist das Verlagerungselement 36 eine keilförmige Ausgestaltung, insbesondere eine dreieckige Form auf, wobei das keilförmige Verlagerungselement 36 entlang des Umfangs des Betätigungselements 20 orientiert ist bzw. sein kann. Das kann den Effekt liefern, dass die Verlagerungselemente 36 eine Normalkraft entlang einer Parallelen zur Längsrichtung L auf einen Wirkpartner ausüben können.

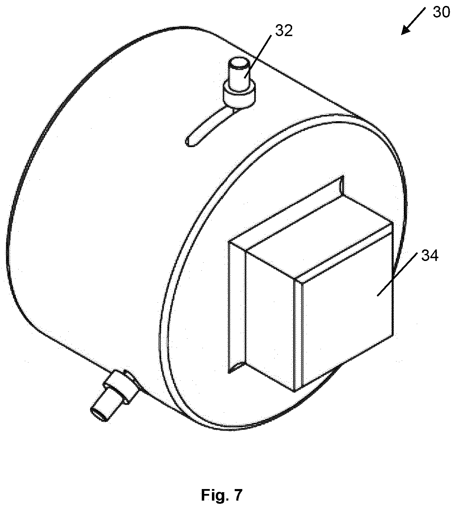

**Fig. 7** zeigt ein Betätigungswerkzeug 30 gemäß einer Ausführungsform der vorliegenden Erfindung, wobei das Betätigungswerkzeug 30 der Ausführungsform aus der Querschnittsansicht von Fig. 4 entsprechen kann. An dem Betätigungswerkzeug 30 sind außenumfänglich Ausnehmungen, insbesondere Taschen, angeordnet, worin Befestigungsstifte eingeführt werden können. Diese Befestigungsstifte können ein Teil der gelenkigen Lagerung der Kupplungselemente 34 darstellen. Ferner weist das Betätigungswerkzeug 30 ein Kupplungselement 34 an einer der Seite auf, die von der Mutter beabstandet ist. Dadurch kann das Betätigungswerkzeug 30 mit einem Werkzeug, insbesondere über einen Vierkant, alternativ oder bevorzugt einen Torx eingreifen.

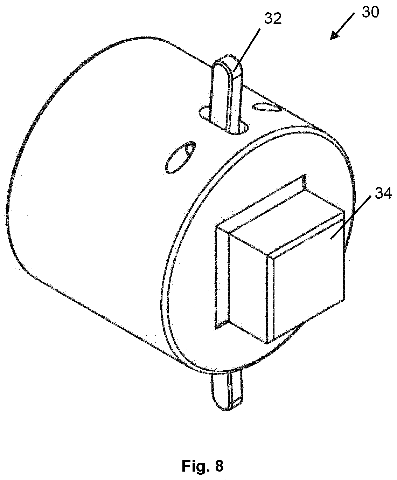

**Fig. 8** zeigt ein Betätigungswerkzeug 30 gemäß einer weiteren Ausführungsform der vorliegenden Erfindung, wobei das Betätigungswerkzeug 30 der weiteren Ausführungsform aus der Querschnittsansicht von Fig. 6 entspricht. In Fig. 8 sind die radial verlaufenden Durchbrüche, insbesondere Schlitze, erkennbar, durch welche die Einstellelemente 32 hindurchführen können. Das Kupplungselement 34 der weiteren Ausführungsform ist in Fig. 8 ähnlich, insbesondere gleich, ausgestaltet wie die das Kupplungselement 34 der Ausführungsform aus Fig. 6 und als Vierkant dargestellt.

### Bezugszeichenliste:

- 1: Montagesystem
- 3: Bolzen
- 5: erste Zwischenscheibe
- 6: zweite Zwischenscheibe
- 10: Mutter
- 11: Vorsprung
- 12: Drehmomentübertragungsstruktur
- 13: Kopfelement
- 14: Betätigungsbereich
- 15: Feder
- 16: Ausnehmung
- 17: Eingriffsstift
- 18: Führungselement
- 19: Betätigungsring
- 20: Betätigungselement
- 21: Primärseite
- 22: Drehmomentübertragungsgegenstruktur
- 23: Sekundärseite
- 24: Zentraldurchbruch
- 26: Eingriffsstruktur
- 30: Betätigungswerkzeug
- 32: Einstellelement
- 34: Kupplungselement
- 36: Verlagerungselement
- 100: Mutterkorpus
- L: Längsrichtung

## Patentansprüche

1. Montagesystem (1) umfassend eine Mutter (10) und ein Betätigungselement (20),
wobei die Mutter (10) eine Drehmomentübertragungsstruktur (12) und das Betätigungselement (20) eine Drehmomentübertragungsgegenstruktur (22) aufweisen,
wobei die Mutter (10) insbesondere einen Betätigungsbereich (14), bevorzugt außenumfänglich, aufweist,
wobei die Mutter (10) eine sich in eine Längsrichtung (L) erstreckende Ausnehmung (16) aufweist,
wobei die Mutter (10) in einer Primärstellung relativ zu dem Betätigungselement (20), insbesondere um die Längsrichtung (L), freidrehbar ist,
wobei die Mutter (10) in einer Sekundärstellung relativ zu dem Betätigungselement (20) formschlüssig eine Drehmomentübertragung, insbesondere um die Längsrichtung (L), zwischen der Drehmomentübertragungsstruktur (12) und der Drehmomentübertragungsgegenstruktur (22) bereitstellt, und wobei
das Betätigungselement (20) eine exzentrische Außenstruktur aufweist, die dazu dient, mit einem weiteren Element in Kontakt zu treten, um so eine Einstellmöglichkeit zu erreichen.

2. Montagesystem (1) gemäß Anspruch 1, wobei die Mutter (10) mehrteilig ausgestaltet ist.

3. Montagesystem (1) gemäß einem der Ansprüche 1 oder 2, wobei die Drehmomentübertragungsstruktur (12) durch zumindest eine Feder (15), insbesondere in Längsrichtung (L) und/oder in die Primärstellung, vorgespannt ist., und/oder wobei die Drehmomentübertragungsstruktur (12) in die Sekundärstellung oder in die Primärstellung entlang der Längsrichtung (L) verlagerbar ist.

4. Montagesystem (1) gemäß einem der vorhergehenden Ansprüche, wobei die Drehmomentübertragungsstruktur (12) und die Drehmomentübertragungsgegenstruktur (22) als je eine komplementäre Struktur zueinander, insbesondere als Verzahnung, ausgebildet sind, und/oder wobei die Drehmomentübertragungsstruktur (12) an zumindest einem Führungselement (18) angeordnet ist, und wobei die oder das Führungselement(e) in Ausnehmungen (16) der Mutter (10) geführt ist oder sind.

5. Montagesystem (1) gemäß einem der vorherigen Ansprüche, insbesondere gemäß Anspruch 4, wobei das Führungselement (18) dazu ausgestaltet ist, mit einem Betätigungsring (19) in Kontakt zu treten, insbesondere mit dem Betätigungsring (19) verklemmt, verklebt, verschweißt, verlötet oder in sonstiger Weise verbunden zu sein.

6. Montagesystem (1) gemäß einem der vorhergehenden Ansprüche, wobei eine als männlich ausgebildete Drehmomentübertragungsstruktur (12) und/oder vorzugsweise als männlich ausgebildete Drehmomentübertragungsgegenstruktur (22) als Eingriffsstifte (17) ausgebildet ist, und wobei eine als weiblich ausgebildete Drehmomentübertragungsgegenstruktur (22) und/oder Drehmomentübertragungsstruktur (12) als komplementäre weibliche Löcher, insbesondere als Durchgangslöcher, ausgebildet ist und/oder sind.

7. Montagesystem (1) gemäß einem der vorhergehenden Ansprüche, insbesondere gemäß Anspruch 6, wobei die Löcher der als Löcher ausgebildeten Drehmomentübertragungsstruktur (12) oder Drehmomentübertragungsgegenstruktur (22) in einem gleichen Winkelabstand zueinander radial um die Längsrichtung (L) an dem Betätigungselement (20) und/oder an der Mutter (10) angeordnet sind, und/oder wobei die Eingriffsstifte (17) eine Verzahnung an einem distalen Ende, insbesondere in Längsrichtung (L), aufweisen.

8. Montagesystem (1) gemäß einem der vorhergehenden Ansprüche, insbesondere gemäß den Ansprüchen 6 bis 7, wobei zumindest einer der Eingriffsstifte (17) an einem Ende ein Kopfelement (13) aufweist, welches insbesondere verschraubt, verklebt, verschweißt, verklemmt, verlötet oder in sonstiger Weise befestigt ist, und/oder wobei das Kopfelement zylindrisch oder flügelartig ausgestaltet ist, und/oder insbesondere eine Anschlagsfläche ausbildet.

9. Montagesystem (1) gemäß einem der vorhergehenden Ansprüche, insbesondere gemäß den Ansprüchen 6 bis 8, wobei die Eingriffsstifte (17) in jeweils einer Ausnehmung der Mutter, insbesondere des Mutterkorpus, angeordnet sind und wobei die Ausnehmungen einen variablen Durchmesser entlang der Längsrichtung aufweisen.

10. Montagesystem (1) gemäß einem der vorhergehenden Ansprüche, insbesondere gemäß den Ansprüchen 6 bis 9, wobei die Eingriffsstifte (17) einen variablen Durchmesser aufweisen und/oder komplementär zu den Ausnehmungen ausgestaltet sind.

11. Montagesystem (1) gemäß einem der vorhergehenden Ansprüche, insbesondere gemäß den Ansprüchen 6 bis 10, wobei die Verlagerung der Eingriffsstifte (17) von der Sekundärstellung zur Primärstellung oder umgekehrt durch distale Endpositionen in Längsrichtung (L) begrenzt ist.

12. Montagesystem (1) gemäß einem der vorherigen Ansprüche, wobei das Betätigungselement (20) die exzentrische Außenstruktur aufweist und/oder wobei das Betätigungselement (20) einen Zentraldurchbruch (24) aufweist, der sich in die Längsrichtung (L) erstreckt, und/oder wobei das Betätigungselement (20) eine Primärseite und eine Sekundärseite aufweist, wobei die Primärseite mit der Mutter (10) in Kontakt bringbar ist oder in Kontakt steht, und/oder wobei das Betätigungselement (20) eine Eingriffsstruktur (26) aufweist, welche radial von dem Zentraldurchbruch beabstandet ist.

13. Betätigungswerkzeug (30) das dazu ausgestaltet ist, mit einer Mutter (10) eines Montagesystems (1) gemäß einem der Ansprüche 1 bis 12 einzugreifen, insbesondere mit einer Betätigungsfläche (14) der Mutter (10) in Kontakt bringbar zu sein,
**dadurch gekennzeichnet, dass** das Betätigungswerkzeug (30) zumindest ein Einstellelement (32) und zumindest ein Verlagerungselement (36) aufweist,
wobei zumindest das Einstellelement (32) mit zumindest dem Verlagerungselement (36) in Kontakt steht,
wobei das Einstellelement (32) dazu ausgestaltet ist, eine Positionsänderung des Verlagerungselements (36) zu bewirken,
wobei das Verlagerungselement (36) mit der Mutter (10) in Kontakt bringbar ist, wenn das Betätigungswerkzeug (30) außenumfänglich um die Mutter (10) greift,
wobei das Betätigungswerkzeug (30) ein Kupplungselement (34) an einem distalen Ende aufweist.

14. Betätigungswerkzeug (30) gemäß Anspruch 13, wobei das Betätigungswerkzeug (20) aus einem metallischen Werkstoff gefertigt ist, bevorzugt eine Eisenlegierung, weiter bevorzugt Stahl, umfasst.

15. Fahrzeug, insbesondere Nutzfahrzeug, mit einem Montagesystem (1) gemäß einem der vorherigen Ansprüche 1 bis 12, welches zumindest ein Fahrwerksteil umfasst, das mit dem Montagesystem (1) an dem Fahrzeug arretiert und/oder befestigt ist.

16. Verwendung eines Montagesystems (1) gemäß einem der vorhergehenden Ansprüche 1 bis 12 zur Fixierung oder zur Einstellung eines Fahrwerkteils, insbesondere eines Fahrwerkteils eines Nutzfahrzeugs.

## Claims

1. Mounting system (1) comprising a nut (10) and an actuating element (20), wherein the nut (10) has a torque transmission structure (12) and the actuating element (20) has a torque transmission counterstructure (22), wherein the nut (10) in particular has an actuating area (14), preferably on its outer circumference,
wherein the nut (10) has a recess (16) extending in a longitudinal direction (L),
wherein the nut (10) is freely rotatable in a primary position relative to the actuating element (20), in particular about the longitudinal direction (L), wherein the nut (10) in a secondary position relative to the actuating element (20) provides a positive torque transmission, in particular about the longitudinal direction (L), between the torque transmission structure (12) and the torque transmission counterstructure (22), and
wherein the actuating element (20) has an eccentric outer structure that serves to come into contact with a further element in order to achieve an adjustment option.

2. . Mounting system (1) according to claim 1, wherein the nut (10) is designed to be multi-part.

3. . Mounting system (1) according to any one of claims 1 or 2, wherein the torque transmission structure (12) is preloaded by at least one spring (15), in particular in the longitudinal direction (L) and/or into the primary position, and/or wherein the torque transmission structure (12) can be displaced into the secondary position or into the primary position along the longitudinal direction (L).

4. . Mounting system (1) according to any one of the preceding claims, wherein the torque transmission structure (12) and the torque transmission counterstructure (22) are each designed as a complementary structure to each other, in particular as a toothing, and/or wherein the torque transmission structure (12) is arranged on at least one guide element (18), and wherein the guide element(s) is or are guided in recesses (16) of the nut (10).

5. . Mounting system (1) according to any one of the preceding claims, in particular according to claim 4, wherein the guide element (18) is designed to come into contact with an actuating ring (19), in particular to be clamped, glued, welded, soldered or otherwise connected to the actuating ring (19).

6. . Mounting system (1) according to any one of the preceding claims, wherein a torque transmission structure (12) designed as male and/or preferably a torque transmission counterstructure (22) designed as male is designed as engagement pins (17), and wherein a torque transmission counterstructure (22) and/or torque transmission structure (12) designed as female is or are designed as complementary female holes, in particular as through holes.

7. . Mounting system (1) according to any one of the preceding claims, in particular according to claim 6, wherein the holes of the torque transmission structure (12) or torque transmission counterstructure (22) designed as holes are arranged at the same angular distance from each other radially around the longitudinal direction (L) on the actuating element (20) and/or on the nut (10), and/or wherein the engagement pins (17) have a toothing at a distal end, in particular in the longitudinal direction (L).

8. . Mounting system (1) according to any one of the preceding claims, in particular according to claims 6 to 7, wherein at least one of the engagement pins (17) has a head element (13) at one end, which is in particular screwed, glued, welded, clamped, soldered or fastened in some other way, and/or wherein the head element is cylindrical or wing-like in design and/or in particular forms a stop surface.

9. . Mounting system (1) according to any one of the preceding claims, in particular according to claims 6 to 8, wherein the engagement pins (17) are arranged in respective recesses in the nut, in particular in the nut body, and wherein the recesses have a variable diameter along the longitudinal direction.

10. . Mounting system (1) according to any one of the preceding claims, in particular according to claims 6 to 9, wherein the engagement pins (17) have a variable diameter and/or are designed to be complementary to the recesses.

11. . Mounting system (1) according to any one of the preceding claims, in particular according to claims 6 to 10, wherein the displacement of the engagement pins (17) from the secondary position to the primary position or vice versa is limited by distal end positions in the longitudinal direction (L).

12. . Mounting system (1) according to any one of the preceding claims, wherein the actuating element (20) has the eccentric outer structure and/or wherein the actuating element (20) has a central opening (24) extending in the longitudinal direction (L), and/or wherein the actuating element (20) has a primary side and a secondary side, wherein the primary side can be brought into contact with or is in contact with the nut (10), and/or wherein the actuating element (20) has an engagement structure (26) which is radially spaced from the central opening.

13. . Actuating tool (30) designed to engage with a nut (10) of a mounting system (1) according to any one of claims 1 to 12, in particular to be brought into contact with an actuating surface (14) of the nut (10),
**characterized in that** the actuating tool (30) has at least one adjustment element (32) and at least one displacement element (36),
wherein at least the adjustment element (32) is in contact with at least the displacement element (36),
wherein the adjustment element (32) is designed to effect a change in position of the displacement element (36),
wherein the displacement element (36) can be brought into contact with the nut (10), when the actuating tool (30) grips the nut (10) around its outer circumference,
wherein the actuating tool (30) has a coupling element (34) at a distal end.

14. . Actuating tool (30) according to claim 13, wherein the actuating tool (20) is made of a metallic material, preferably comprising an iron alloy, more preferably steel.

15. . Vehicle, in particular commercial vehicle, with a mounting system (1) according to any one of the preceding claims 1 to 12, which comprises at least one chassis part that is locked and/or fastened to the vehicle with the mounting system (1).

16. . Use of a mounting system (1) according to any one of the preceding claims 1 to 12 for fixing or adjusting a chassis part, in particular a chassis part of a commercial vehicle.

## Revendications

1. Système de montage (1) comprenant un écrou (10) et un élément d'actionnement (20),
dans lequel
l'écrou (10) comporte une structure de transmission de couple (12) et l'élément d'actionnement (20) comporte une contre-structure de transmission de couple (22),
en particulier, l'écrou (10) comporte une zone d'actionnement (14), de préférence sur son pourtour extérieur,
l'écrou (10) comporte un évidement (16) s'étendant dans une direction longitudinale (L),
dans une position primaire par rapport à l'élément d'actionnement (20), l'écrou (10) est apte à tourner librement, en particulier autour de la direction longitudinale (L),
dans une position secondaire par rapport à l'élément d'actionnement (20), l'écrou (10) assure une transmission de couple par complémentarité de forme, en particulier autour de la direction longitudinale (L), entre la structure de transmission de couple (12) et la contre-structure de transmission de couple (22), et
l'élément d'actionnement (20) présente une structure extérieure excentrique qui sert à entrer en contact avec un autre élément afin d'obtenir ainsi une possibilité de réglage.

2. Système de montage (1) selon la revendication 1,
dans lequel l'écrou (10) est réalisé en plusieurs parties.

3. Système de montage (1) selon l'une des revendications 1 ou 2,
dans lequel la structure de transmission de couple (12) est précontrainte par au moins un ressort (15), en particulier dans la direction longitudinale (L) et/ou vers la position primaire, et/ou
la structure de transmission de couple (12) est apte à être déplacée vers la position secondaire ou vers la position primaire le long de la direction longitudinale (L).

4. Système de montage (1) selon l'une des revendications précédentes,
dans lequel la structure de transmission de couple (12) et la contre-structure de transmission de couple (22) sont chacune conçues comme une structure complémentaire l'une par rapport à l'autre, en particulier sous forme de denture, et/ou
la structure de transmission de couple (12) est disposée sur au moins un élément de guidage (18), et le ou les éléments de guidage sont guidés dans des évidements (16) de l'écrou (10).

5. Système de montage (1) selon l'une des revendications précédentes, en particulier selon la revendication 4,
dans lequel l'élément de guidage (18) est conçu pour entrer en contact avec une bague d'actionnement (19), en particulier pour être serré, collé, soudé, brasé ou relié de toute autre manière à la bague d'actionnement (19).

6. Système de montage (1) selon l'une des revendications précédentes,
dans lequel une structure de transmission de couple (12) de type mâle et/ou une contre-structure de transmission de couple (22) de préférence de type mâle sont conçues sous forme de goupilles d'engagement (17), et
une contre-structure de transmission de couple (22) et/ou une structure de transmission de couple (12), de type femelle, sont conçues sous forme de trous femelles complémentaires, en particulier sous forme de trous traversants.

7. Système de montage (1) selon l'une des revendications précédentes, en particulier selon la revendication 6,
dans lequel les trous de la structure de transmission de couple (12) ou de la contre-structure de transmission de couple (22), réalisée sous forme de trous, sont disposés à une même distance angulaire les uns des autres, radialement autour de la direction longitudinale (L), sur l'élément d'actionnement (20) et/ou sur l'écrou (10), et/ou
les goupilles d'engagement (17) présentent une denture à une extrémité distale, en particulier dans la direction longitudinale (L).

8. Système de montage (1) selon l'une des revendications précédentes, en particulier selon les revendications 6 à 7,
dans lequel l'une au moins des goupilles d'engagement (17) comporte, à une extrémité, un élément de tête (13) qui est notamment vissé, collé, soudé, serré, brasé ou fixé d'une autre manière, et/ou l'élément de tête est de forme cylindrique ou en forme d'oreille et/ou constitue notamment une surface de butée.

9. Système de montage (1) selon l'une des revendications précédentes, en particulier selon les revendications 6 à 8,
dans lequel les goupilles d'engagement (17) sont disposées chacune dans un évidement de l'écrou, en particulier du corps de l'écrou, et les évidements présentent un diamètre variable le long de la direction longitudinale.

10. Système de montage (1) selon l'une des revendications précédentes, en particulier selon les revendications 6 à 9,
dans lequel les goupilles d'engagement (17) présentent un diamètre variable et/ou sont conçues de manière complémentaire aux évidements.

11. Système de montage (1) selon l'une des revendications précédentes, en particulier selon les revendications 6 à 10,
dans lequel le déplacement des goupilles d'engagement (17) de la position secondaire à la position primaire ou inversement est limité par des positions de fin de course distales dans la direction longitudinale (L).

12. Système de montage (1) selon l'une des revendications précédentes,
dans lequel l'élément d'actionnement (20) présente la structure extérieure excentrique et/ou l'élément d'actionnement (20) présente un passage central (24) s'étendant dans la direction longitudinale (L), et/ou
l'élément d'actionnement (20) comporte un côté primaire et un côté secondaire, le côté primaire pouvant être mis en contact avec l'écrou (10) ou étant en contact avec celui-ci, et/ou
l'élément d'actionnement (20) comporte une structure d'engagement (26) qui est espacée radialement du passage central.

13. Outil d'actionnement (30) conçu pour venir en prise avec un écrou (10) d'un système de montage (1) selon l'une des revendications 1 à 12, en particulier pour pouvoir être mis en contact avec une surface d'actionnement (14) de l'écrou (10),
**caractérisé en ce que** l'outil d'actionnement (30) comporte au moins un élément de réglage (32) et au moins un élément de déplacement (36),
au moins l'élément de réglage (32) étant en contact avec au moins l'élément de déplacement (36),
l'élément de réglage (32) étant conçu pour provoquer un changement de position de l'élément de déplacement (36),
l'élément de déplacement (36) pouvant être mis en contact avec l'écrou (10) lorsque l'outil d'actionnement (30) enserre l'écrou (10) sur son pourtour extérieur,
l'outil d'actionnement (30) comportant un élément d'accouplement (34) à une extrémité distale.

14. Outil d'actionnement (30) selon la revendication 13,
dans lequel l'outil d'actionnement (20) est fabriqué dans un matériau métallique, de préférence un alliage de fer, de préférence encore de l'acier.

15. Véhicule, en particulier véhicule utilitaire, comportant un système de montage (1) selon l'une des revendications précédentes 1 à 12, qui comprend au moins une partie de châssis qui est bloquée et/ou fixée au véhicule à l'aide du système de montage (1).

16. Utilisation d'un système de montage (1) selon l'une des revendications précédentes 1 à 12 pour la fixation ou le réglage d'une partie de châssis, en particulier d'une partie de châssis d'un véhicule utilitaire.
